Europäisches Patentamt

European Patent Office

Office européen des brevets

(19)

(11) Publication number: **0 228 765**

**A2**

(12) # EUROPEAN PATENT APPLICATION

(21) Application number: **86307503.2**

(22) Date of filing: **01.10.86**

(51) Int. Cl.⁴: $G\ 01\ B\ 11/06$

(30) Priority: **01.10.85 GB 8524145**

(43) Date of publication of application:
**15.07.87 Bulletin 87/29**

(84) Designated Contracting States:
**CH DE FR GB IT LI**

(71) Applicant: **THE UNIVERSITY OF LIVERPOOL**
**Senate House Abercromby Square P.O. Box 147**
**Liverpool L69 3BX(GB)**

(71) Applicant: **A.R. ENGINEERING LIMITED**
**Sherdley Road Industrial Estate Sherdley Road**
**St. Helens(GB)**

(72) Inventor: **Court, Geoffrey Russell**
**46 Sandham Grove**
**Barnston Wirral Merseyside, L60 1XR(GB)**

(72) Inventor: **Daborn, Anthony Redvers**
**6 Bobnfire Hill Close Crawshawbooth**
**Rossendale Lancashire, BB4 8PP(GB)**

(72) Inventor: **Houlden, Michael Anthony**
**280 Eaton Road**
**West Derby Liverpool, L12 2AN(GB)**

(74) Representative: **Huntingford, David Ian et al,**
**W.P. THOMPSON & CO. Coopers Building Church Street**
**Liverpool L1 3AB(GB)**

(54) Device for monitoring the position of a surface of a body, in particular the thickness of a coating.

(57) A device for monitoring the position of a surface of a body, such as in the monitoring of the thickness of a coating being applied to a workpiece (10) by means of a gas spraying technique. A source of electromagnetic radiation (26) projects radiation onto the surface (42) of the object (10) in a direction inclined to the normal to that surface and there is formed and detected an image of radiation scattered from the surface in a direction inclined to the direction of the incident radiation. A detecting means (24) then detects the displacement of the position of the image in a direction substantially perpendicular to the direction in which the scattered radiation is detected arising from displacement of the surface (42) in the direction of the normal.

Fig 1.

Fig 2.

-1-

0228765

# DESCRIPTION

## MONITORING DEVICE.

The invention relates to a device for monitoring the position of a surface of a body, and in particular, but not exclusively, to a device for monitoring the thickness of a coating being applied to a workpiece by means of a gas spraying technique.

In gas spraying, a powdered coating material, such as a metal or a metal oxide, is fed into the flame of an oxyacetylene torch which is directed at a workpiece to be coated. The coating material is melted as it meets the flame, and is propelled with the flame at high speed towards the workpiece. The high speed of the molten particles causes them to adhere firmly to the workpiece. By rotating the workpiece on a lathe and moving the torch at constant speed parallel to the rotational axis of the workpiece, a coating of fairly even thickness may be applied to the workpiece. Thicker coatings may be built up by successive passes of the torch.

However, it is found that the amount of material applied during each pass can vary considerably, especially because of changes in the moisture content of the powdered coating material. This causes difficulties when a plurality of coated components is being produced to a single tolerance, because the critical dimensions of a workpiece can only be checked when the workpiece has been stopped from rotating and after it has cooled down to a temperature close to ambient temperature. Then a measurement can be taken with a micrometer. As will be appreciated, the use of an oxyacetylene torch causes the temperature of the workpiece to rise considerably, and it takes a considerable time for the workpiece to cool sufficiently to allow measurements to be made. Also, in stopping the lathe and taking a measurement of the workpiece, the surface of the coating may be contaminated, e.g. by greasy hands or a dirty micrometer. Contamination of this coating, or of the surface of the workpiece itself, can often prevent the application of further coating material by preventing adhesion of the coating powder onto the contaminated areas. Thus, measurements which require manual handling and/or contact of a measuring device are undesirable.

Even when measurements have been made it may be necessary to repeat the coating procedure several times, including allowing the workpiece to cool and taking further measurements, to obtain the required thickness of coating. It may be found that the coating applied is too thick and it may be necessary to have the item machined to size. This latter case is particularly undesirable when the cost of the coating powder is appreciable, for example, tantalum powder costs about £330 per pound (approximately £725 per kg). A partial solution, when several items are to be coated, is to remove one item from the lathe and allow it to cool while another item is being coated. However, it has been found that the production of finished items without dimension checking during the coating process produces a large proportion of items which are out of tolerance, and thus repeated remounting and recoating of the items is required.

It would thus be desirable to have a device which could be used to monitor the thickness of a coating applied to a workpiece while the workpiece was actually being coated, such a device being able to withstand the hostile environment which exists in the vicinity of a gas spraying unit.

In accordance with a first aspect of the present invention, there is provided a device for monitoring the displacement of a point or portion on the surface of an object in a direction substantially parallel to the normal to the surface, which device comprises a source of electromagnetic radiation which projects radiation onto the surface of the object in a direction inclined to the said normal, means for forming and detecting an image of radiation scattered from the surface in a direction inclined to the direction of the incident radiation and means for detecting the displacement of the position of the image in a direction substantially perpendicular to the direction in which the scattered radiation is detected arising from displacement of the surface in the direction of the normal.

Conveniently, the direction in which radiation scattered from the surface is detected may be substantially parallel to the normal to the surface.

The object may be rotating, and there may be means for indicating when a signal produced at the detection means is to be measured, so that signals are produced at a given angular orientation of the object. The means for monitoring the displacement of a particular point or portion preferably comprise triggering means which sends a signal to a control device when the object is in a given orientation which, after a certain delay, measures the displacement of the image.

Preferably, there are means for selecting for how long a signal produced at the detection means is to be measured. For example, if there is a large run-out, the measurement must take place over a relatively short period, or else variation in the displacement of the image will occur. However, if the run-out is small, measurement may take place over a longer period.

There may be means for monitoring the displacement of a plurality of points or portions at different angular positions of the object, e.g. by varying the delay after the signal from the triggering device is received by the control device, and/or at different positions along the axis of rotation of the object.

Alternatively, or in addition, there may be means for varying the length of time for which a signal produced at the detection means is measured. For example, if a workpiece has a small run-out, measurement may take place over a longer period than if the workpiece has a large run-out.

Preferably, the control device is a microprocessor or a computer, and preferably the detection means is a multi-channel linear array charge coupled optical detector. The function of this detector is to integrate the electromagnetic radiation falling upon it over a definable time interval. This smooths out the effect of surface structure to produce a more precise spot of scattered light.

The device may be used to monitor the thickness of a coating being applied to the object, e.g. the thickness of metal or paint.

According to a second aspect of the present invention, there is provided a device for monitoring the build-up of a coating on an object, which device comprises a source of electromagnetic radiation which projects radiation onto the surface of the object in a direction inclined to the normal to said surface, means for forming and detecting an image of radiation scattered from the surface in a direction inclined to the direction of the incident radiation and means for detecting the displacement of the position of the image in a direction substantially perpendicular to the direction in which the scattered radiation is detected arising from build-up of the coating on the object.

Conveniently, the direction in which radiation scattered from the surface is detected may be substantially parallel to the normal to the surface.

In accordance with a third aspect of the invention, there is provided a device for analysing the microscopic profile of a portion of a microscopic surface, which device comprises a source of electromagnetic radiation which projects radiation onto the surface of the object in a direction inclined to the normal to said surface, means for forming an image of radiation scattered from the surface in a direction inclined to the direction of the incident radiation and a plurality of means for detecting the image, whose output may be analysed to reveal the microscopic profile.

Conveniently, the direction in which radiation scattered from the surface is detected may be substantially parallel to the normal to the surface.

By way of example only, a specific embodiment of the present invention will now be described, with reference to the accompanying drawings, in which:-

Fig.1 is a perspective view of a workpiece secured in the chuck of a lathe, having a metal coating sprayed onto it and being monitored by a monitoring device according to the invention; and

Fig.2 is a diagrammatic detail side view of the interior of the monitoring device of Fig.1.

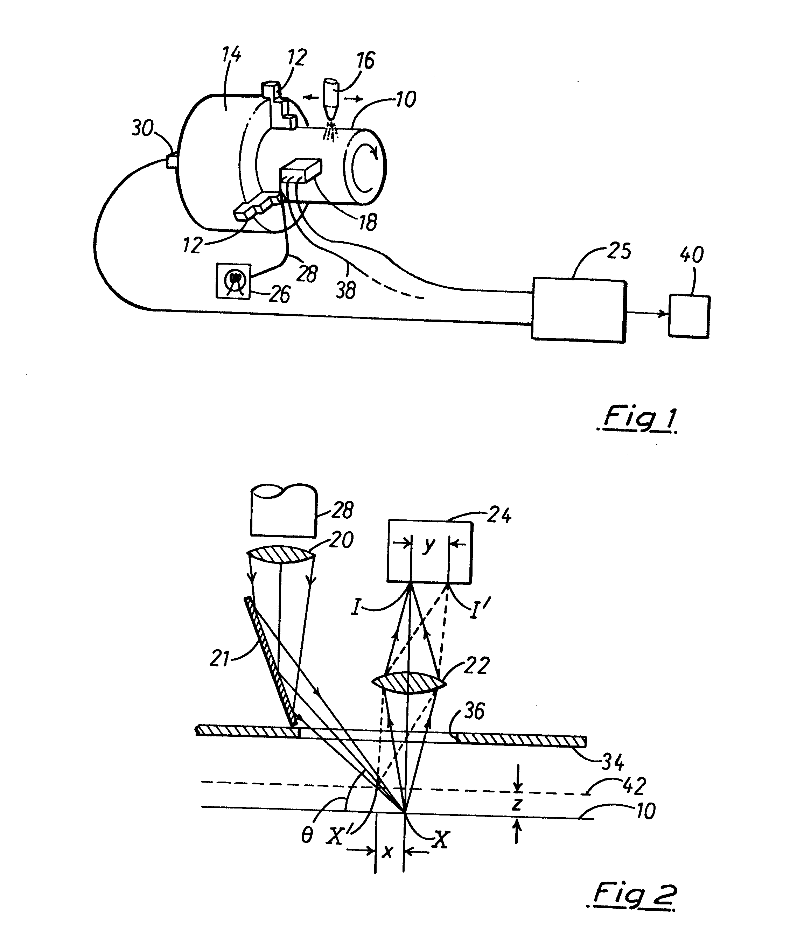

Referring firstly to Fig.1, a cylindrical workpiece 10 is securely mounted in the jaws 12 of the chuck 14 of a lathe, two of which jaws are visible in Fig.1. The workpiece is rotatably mounted in the lathe so that it can be coated with a metal coating from a metal spraying device 16. In use, the chuck 14 and workpiece 10 are rotated, and the metal spraying device 16 is moved in a path parallel to the pivotal axis of the lathe, applying successive coats of metal to the workpiece.

A monitoring device 18 according to the invention is positioned approximately 1cm from the surface of the workpiece. This is shown, diagrammatically, in more detail in Fig.2, and it comprises a first focussing lens 20, of 3 cm focal length, and with its optical axis normal to the workpiece surface, a mirror 21 inclined at an angle of 22.5 degress to the normal, a second focussing lens 22, of 1.8 cm focal length, and with its optical axis normal to the workpiece surface, and a 256 channel linear array charge coupled optical detector 24. The optical detector is a one-dimensional array approximately 13 microns by 0.3 cm of 256 high sensitivity photocells, the outputs of which may be analysed by a microprocessor 25.

Light from a quartz iodine projector lamp 26 (Fig.1) is fed along an optical fibre 28 of 100 microns diameter to the first focussing lens 20, and the light is focussed on the uncoated surface of the workpiece 10 at an angle of 45 degrees to the normal. The monitoring device is mounted in a strong metal casing 34 which is airtight except for a surface viewing aperture 36 in the face of the casing adjacent the workpiece, through which aperture light is projected and scattered back to the detector 24. A flexible tube 38 supplies clean compressed air to the interior of the device, through an aperture in the rear of the casing. The air supply keeps the components of the device cool, and the flow of air out of the viewing aperture prevents coating powder from entering the casing and thus contaminating the components.

A triggering device 30 is provided, and comprises an optical detector and a light emitting diode mounted adjacent to each other, which are positioned about 1 cm from the rotating chuck 14. Light from the light emitting diode is projected onto the rear face of the chuck 14, and positioned on the rear face of the chuck, in the path of the light which is projected thereon, is a small polished metal reflector (not visible in Fig.1). When the reflector is opposite the device 30, light from the light emitting diode is reflected back to the optical detector in the triggering device and a signal is sent to the controlling microprocessor 25. As will be explained more fully, the detection of a triggering signal by the triggering device allows measurement to take place at a specific location on the workpiece, irrespective of the rotational accuracy of the workpiece, and so accurate centring of the workpiece on the lathe is not critical.

In use, the workpiece 10 is mounted in the lathe and the lathe is switched on. As the workpiece rotates, light from the optical fibre 28 is focussed and reflected onto the surface of the workpiece, shown as point X in Fig.2. Light scattered from the surface of the workpiece is focussed by lens 22 onto the charge coupled optical detector 24. However, since the workpiece may not have been aligned accurately, the image formed by the lens 22 may move slightly as the workpiece rotates. Thus, the triggering device is used to synchronise the measurement. At a preset time after the triggering signal is sent from the triggering device 30 to the microprocessor 25, the microprocessor measures and records the signals from the detector 24. An operator will have instructed the microprocessor previously for how long the signal from the detector is to be measured. For example, if there is a large run-out, measurement of the signal will necessarily be short, since the image I will move considerably as the workpiece rotates. Conversely, if there is a small run-out, the image I will be relatively steady, and measurement over a longer period may be made. Knowing the speed of revolution of the workpiece, an operator can determine the time for one revolution, and by selecting the measuring period accordingly, can determine what proportion of the circumference will be monitored. Thus, the measurement of the light scattered from the surface of the workpiece is always from the same place or area on the workpiece. The position where the image is formed, shown as I in Fig.2, is taken as the zero position and thus is selected as such by an operator and displayed as such on a display 40 controlled by the microprocessor.

The application of the metal coating then begins. The device 16 applies a metal coating to the workpiece, between the limits desired, by moving parallel to the axis of rotation of the lathe. When this coating has been deposited it forms a layer 42, shown highly exaggerated as a dotted line in Fig.2, of thickness $z$ on the surface of the workpiece, and as can be seen from Fig.2 the scattering of the incoming light occurs at a point X' which is at a distance $x$ along the surface of the workpiece towards the incoming light. Light is scattered from X' and is focussed by lens 22 into an image I' on the detector 24. This is shown in dotted lines in Fig.2. As can be seen, application of a coating of thickness $z$ causes the image of the light scattered from the surface to be displaced through a distance $y$ on the detector 24.

It will be appreciated from Fig.2 that

$$z = x \tan \theta$$

It will also be appreciated that, if the image magnification is M, then

$$M = y/x$$

Thus,

$$z = \frac{y}{M} \tan \theta$$

The device can be calibrated to find M, from which the thickness of the layer can be determined by detection of the displacement $y$ at the detector 24. Calibration is performed by taking a zero measurement of $y$ with an uncoated workpiece, then moving the monitoring device by a predetermined amount and taking a measurement of displacement of the image. Since

$$M = \frac{y}{z} \tan \theta$$

the magnification M can be determined, and its value stored in the microprocessor so that values of $z$ may be displayed directly.

The image I' of the spot of light will not be in focus because the incoming light is focussed on the actual surface of the workpiece while the scattering takes place from the surface of the coating. However, the image I' will be spread over a plurality of the photocells of the detector 24, and by analysing the signal from each of the photocells the microprocessor can determine the spot profile and calculate the centre of the image I' and hence the displacement $y$.

The following parameters have been shown to give good results:

| | |
|---|---|
| Spot diameter | 0.014 cm |
| Spot diameter when projected on workpiece | 0.02 cm |
| Spot diameter at detector | 0.04 cm |
| Spot movement magnification x/z | 1.00 |
| Spot image magnification x/y | 2.08 |

The theoretical optimum position resolution with the system is 7 um, but the best value obtained is 25 um. The above parameters give a reading range of 0.1 cm.

It has been found in practice that the device as described can measure the change in radius of a rotating object which is being spray coated to an accuracy better than 1 thou (25 microns).

Thus, the embodiment described above uses the ability of the CCD 24 to store (integrate) the reflected electromagnetic radiation over a period of time. This gives data in the form of a frequency distribution, i.e. the intensity measured in each pixel (light sensitive element) of the CCD is directly proportional to the number of photons which have hit it. Thus, the CCD is not being used as a binary on/off switch, but rather the data is being captured in a form which lets the mean value, or centre, of the distribution be found using mathematical or statistical methods. It is this which gives this embodiment its precision, because the roughness of the surface is 'averaged out' by scanning over a small section of the moving surface. Were this averaging not done, i.e. one were to look at a stationary rough surface, then the data from the CCD would not be a smooth peak, but one with sharp peaks, which would shift their position dramatically as different parts of the surface are scanned. In that event, it would not be possible to define what is meant by the centre of the peak, and the precision of the method would be lost.

Obviously, the temperature of the workpiece will increase during coating and the workpiece will expand, thus producing incorrect readings for when the workpiece is cool. In order to overcome this, calibration can be carried out on a heated uncoated workpiece, or alternatively a temperature profile, comprising the expansion of the workpiece on successive passes of the spray gun, may be store in the microprocessor which the compensates automatically. A micro-switch operated by the spray gun may give information to the microprocessor as to how many passes have been made.

It will be noted that, because the time interval over which the data can be captured is decided by electronic means, e.g. by triggering at a particular part of the rotation cycle, a scan around the circumference of a rotating object can be made by introducing a variable delay between the trigger signal and the time of data capture. This means that the sensing head can be kept stationary while the work rotates under it, rather than having to move the sensing head around the work.

The invention is not restricted to the details of the foregoing embodiment. For example, if it is desired to investigate the thickness of the coating around the whole periphery of the workpiece, the microprocessor may be arranged to measure the position of the image I and the corresponding displacement $y$ of the image I' at a plurality of different times after the triggering signal has been received, or, if the run-out of the workpiece is found to be small, the position of the image I' may be detected over a larger portion of a revolution of the workpiece. In the latter case, the signal would be averaged out, and an average value of the coating thickness would be obtained. This can be done with knowledge of the speed of revolution of the workpiece, calculating the time for one revolution, and selecting the period accordingly for which measurement of the signal at the detector is to be made. For a very small run-out, no signal may be measured for substantially a complete revolution of the workpiece. In this way, a profile of the thickness of the coating at a given distance along the rotational axis of the workpiece may be calculated and may be displayed as a series of thickness readings or as a visual display, as appropriate.

By an extension of the above, it is possible to monitor the thickness of the coating over the whole surface of the workpiece. If the above operation is repeated at a plurality of locations along the rotational axis of the workpiece, it will be appreciated that a measurement of the thickness of the coating may be obtained for substantially the whole of the surface area of the workpiece.

Instead of a quartz iodine projector lamp, other light sources may be used. If the run-out of the workpiece is large and/or if the workpiece is rotating rapidly, measurement of the scattered light must be taken over a short period of time. Thus, the intensity of the light source must be increased in order for sufficient light to be scattered to the detector. A laser may be used in this case. For very high speeds of revolution, i.e. very short periods of measurement, a pulsed laser may be used, and the pulses of the laser may be used instead of the triggering device 30 to produce a triggering signal. Instead of a laser or a lamp, a light emitting diode may be mounted in the monitoring device. Again, for very high speeds of revolution, the light emitting diode may be pulsed, whose pulses may too be used for triggering purposes.

The invention is not restricted to measuring the thickness of an applied coating. It may be used where it is desired to monitor continuously the position or displacement of an object. For example, it may be used to measure the expansion of a turbine blade in a turbine. All such measurements are remote and do not affect the operation of the object in question.

It has also been found that by increasing the magnification M (by using lenses of different focal length or by moving the positions of the lenses) the monitoring device becomes more sensitive, and the output of the detecting device may be used to gain information on the surface profile of the workpiece. In such a use, the workpiece need not be rotating, and a surface of a stationary object may have its profile analysed. The signals detected by the plurality of photocells may be used to reveal directly the microscopic surface profile of the object.

Although described above in connection with the formation of extra layers on a substrate, the basic technique can also be used to measure the machining off of material in a lathe, with the advantage that because it measures from the surface of the work, the effect of tool wear is eliminated.

It should also be noted that the present method can also be used to measure movement and vibration in high-speed rotating machinery, such as turbines.  It can also be used to measure vibrations in many situations, because the time at which the data is captured can be varied in a controlled way, so the displacement of the vibrating surface can be measured as a function of time.

. . . . . . . . . . . . . . . . . . . . . . . . . . . . . . . . . . . . . . . . . . . . . . . . . . . . . . . . . . . . . .

CLAIMS

1. A device for monitoring the displacement of a point or portion on or in relation to the surface of an object in a direction substantially parallel to the normal to the surface, which device comprises a source of electromagnetic radiation which projects radiation onto the surface of the object in a direction inclined to the said normal, means for forming and detecting an image of radiation scattered from the surface in a direction inclined to the direction of the incident radiation and means for detecting the displacement of the position of the image in a direction substantially perpendicular to the direction in which the scattered radiation is detected arising from displacement of the surface in the direction of the normal.

2. A device as claimed in claim 1, wherein the direction in which radiation scattered from the surface is detected is substantially parallel to the normal to the surface.

3. A device as claimed in claim 1 or 2, wherein said object is a rotating object and wherein said device includes means for indicating when a signal produced at the detection means is to be measured, whereby signals are produced only at a predetermined angular orientation of the object.

4. A device as claimed in claim 3, including a triggering means which sends a signal to a control device when the object is in a given orientation which, after a certain delay, mitigates the measure of the displacement of the image.

5. A device as claimed in claim 4, wherein the control device is a microprocessor or a computer.

6. A device as claimed in any of claims 1 to 5, including a means for selecting for how long a signal produced at the detection means is to be measured.

7. A device as claimed in any of claims 1 to 6, wherein the detection means is a multi-channel linear array charge coupled optical detector which integrates the electromagnetic radiation falling upon it over a definable time interval whereby to smooth out the effects of variations in the surface of the object under inspection.

8. A device for monitoring the build-up of a coating on an object, which device comprises a source of electromagnetic radiation which projects radiation onto the surface of the object in a direction inclined to the normal to said surface, means for forming and detecting an image of radiation scattered from the surface in a direction inclined to the direction of the incident radiation and means for detecting the displacement of the position of the image in a direction substantially perpendicular to the direction in which the scattered radiation is detected arising from build-up of the coating on the object.

9. A device as claimed in claim 8, wherein the direction in which radiation scattered from the surface is detected is substantially parallel to the normal to the surface.

10. A device as claimed in claim 8 or 9, wherein the detection means is a multi-channel linear array charge coupled optical detector which integrates the electromagnetic radiation falling upon it over a definable time interval whereby to smooth out the effects of variations in the surface of an object being coated.

11. A device for analysing the microscopic profile of a portion of a microscopic surface, which device comprises a source of electromagnetic radiation which projects radiation onto the surface of the object in a direction inclined to the normal to said surface, means for forming an image of radiation scattered from the surface in a direction inclined to the direction of the incident radiation and a plurality of means for detecting the image, whose output may be analysed to reveal the microscopic profile.

12. A device as claimed in claim 11, wherein the direction in which radiation scattered from the surface is detected is substantially parallel to the normal to the surface.

13. A device as claimed in claim 11 or 12, wherein said plurality of means comprises a multi-channel charge coupled device which is arranged to integrate the reflected electromagnetic radiation over a predetermined period of time to enable a mean value of the detected data to be calculated.

14. A device substantially as hereinbefore described with reference to and as illustrated in the accompanying drawings.

..................................................

Fig 1

Fig 2